# EUROPEAN PATENT SPECIFICATION

(11) **EP 4 511 735 B1**
(45) Date of publication and mention of the grant of the patent: **23.09.2026**
(21) Application number: 22725402.6
(22) Date of filing: 22.04.2022
(51) Int. Cl.: G06F 9/445

(54) **COMPUTER IMPLEMENTED METHOD, COMPUTING SYSTEM AND CONFIGURATION FILE FOR IMPROVED SETUP, CONFIGURATION AND OPERATION OF ROBOTIC SYSTEMS**
COMPUTERIMPLEMENTIERTES VERFAHREN, COMPUTERSYSTEM UND KONFIGURATIONSDATEI FÜR VERBESSERTEN AUFBAU, KONFIGURATION UND BETRIEB VON ROBOTERSYSTEMEN
PROCÉDÉ MIS EN OEUVRE PAR ORDINATEUR, SYSTÈME INFORMATIQUE ET FICHIER DE CONFIGURATION POUR PARAMÉTRAGE, CONFIGURATION ET FONCTIONNEMENT AMÉLIORÉS DE SYSTÈMES ROBOTIQUES

(43) Date of publication of application: 26.02.2025
(73) Proprietor: Mov.AI Ltd, London EC1V 2NX (GB)
(72) Inventor: SCHWEITZER, Limor, 2765-421 Estoril (PT)
(74) Representative: Bardehle Pagenberg Partnerschaft mbB Patentanwälte Rechtsanwälte
(86) International application number: PCT/EP2022/060757
(87) International publication number: WO 2023/202783

(56) References cited:
- US-B2- 9 679 610

## Description

### 1. Technical field

The present disclosure relates to methods, systems and configuration files for efficient, secure and scalable configuration as well as resource efficient operation of robotic systems that need to perform complex non-deterministic and adaptive behaviors.

### 2. Background

Robotic systems capable of carrying out a complex series of actions autonomously are ubiquitous in modern technology and industry. For example, autonomous mobile robots (AMRs) are a type of robotic system that can understand and move through dynamically changing environments independently and autonomously and are used to improve operational efficiency, speed, precision, and safety in warehouses, logistical companies, agriculture businesses, and in healthcare institutions etc.

AMRs typically use a sophisticated set of sensors, actuators and software to perceive, interpret and navigate through their environment, untethered from wired power or external controllers or guiding systems. AMRs dynamically assess and respond to their surroundings while completing a variety of tasks autonomously. This flexibility makes them a valuable tool that can be used across a plurality of applications and industries.

Typically, configuring a robotic system such as an AMR for a new type of behavior and /or a new operational environment requires writing and testing a new control program that defines how the individual robotic system should operate its sensors and actuators and what kind of algorithms or software modules (e.g., object recognition, SLAM, etc.) are needed and how they are linked and combined during runtime. Typically, the more complex and demanding the task the robotic system needs to perform the more complex and costly generation and validation of the corresponding control program will be.

To simplify generating such complex control programs for various types of robotic systems using a variety of different hardware configurations, during the last 15 years, the so-called *Robot Operating System* (ROS) has been developed. Essentially, ROS is an open-source robotics middleware suite. Although ROS is not an operating system in the conventional meaning of the term, but a set of software frameworks for robot software development, it provides services designed for a heterogeneous computer cluster such as hardware abstraction, low-level device control, implementation of commonly used functionality, message-passing between processes, and package management.

Running sets of ROS-based processes are represented in a graph architecture where processing takes place in nodes that may receive, post, and multiplex sensor data, control, state, planning, actuator, and other messages. Despite the importance of reactivity and low latency in robot control, ROS is not a real-time operating system.

Historically, ROS was designed in an academic context and only recently ROS has started being used in industrial automation context as a foundation on top of which integrators and developers of mobile robots and similar robotic systems build industrial automation applications. Thus, the typical ROS workflow is still designed for an early-stage R&D situation and the main premise of ROS is for use in development stage rather than for (large-scale) deployment of robotic systems and control programs.

Further, the *Roslaunch* package of ROS is a software tool for launching multiple ROS processes locally and remotely via SSH, as well as setting parameters on a Parameter Server. Essentially, *Roslaunch* is a framework for launching ROS processes (also called ROS Nodes) whereby the associated data required for the ROS Nodes to run needs to be entered through complex XML files. All of ROS is presumed to be run in multiple Linux windows running Shell command lines.

Thus, even with the improvements offered by ROS, configuring a robotic system is still a complex and time-consuming task that can typically only be performed by experienced programmers. Further, aspects of large-scale deployment of robotic systems and of the corresponding control programs in an industrial context have not been properly addressed. In addition, some robotic systems or components do not use ROS or only to a limited extend.

As the demand for robotic systems as well as the complexity of application scenarios and the associated performance requirements steadily increase, further improvements in software and computing technology for operation and configuration of robotic systems are needed.

US 9,679,610B2 discloses a method for synchronizing audio/video (A/V) playback across multiple separate devices, such as smartphones and TVs. In this system, a configuration file is used as one possible method for a client device to identify and locate the central "A/V orchestrator" on a network. Once located, the orchestrator acts as a time master, periodically broadcasting synchronization notifications containing a timestamp and the corresponding playback position in the media file.

### 3. Summary

While the background of the present disclosure was introduced above with reference to AMRs and ROS, the present disclosure is not limited to such systems and technologies.

Thus, the term *"robotic system"* as used herein is to be understood broadly to include any type of robotic systems that use sensors to gain information on its environment, process this information and control actuators to move around in the environment and / or to manipulate or interact with the environment. Examples of robotic systems thus include AMRs, industrial robots and industrial automation systems, autonomous ground or aerial vehicles etc.

### Aspects relating to efficient configuration of robotic systems to perform complex behaviors

In a first aspect, the present disclosure relates to a computer-implemented method for generating a configuration file for program code assembly and runtime process orchestration of a computer program defining a non-deterministic behavior of a robotic system that adapts to a dynamically changing environment, the method comprising: obtaining, by a compute node (e.g. a server, a virtual machine, etc.), for each executable of a set of executables, unique and immutable path information for a set of executables, wherein each executable comprises program code defining a functional element of the non-deterministic behavior. The method further comprises obtaining, by the compute node, data exchange protocol configurations (e.g., ROS publish subscribe topic configurations; TCP/IP configurations, real-time ethernet configuration etc.) for the set of executables, obtaining, by the compute node, runtime process orchestration information specifying at least one processing relationship for the set of executables, and generating, by the compute node, the configuration file using the obtained unique and immutable path information for the set of executables, the data exchange protocol configurations for the set of executables and the runtime process orchestration information for the set of executables. The set of executables comprises one or more sensor control modules, one or more actuator control modules and one or more behavior algorithm modules. The runtime process orchestration information, obtained by the compute node, comprises information specifying how sensor data obtained via the sensor control modules is to be processed by the behavior algorithm modules to generate adaptive actuator control instructions for the actuator control modules. Note that the term "set" as used herein refers to a set of one or more elements.

The present disclosure also provides a corresponding configuration file for program code assembly and runtime process orchestration of a computer program defining a non-deterministic behavior of a robotic system that adapts to a dynamically changing environment, the configuration file comprising: unique and immutable path information for a set of executables, wherein each executable comprises program code defining a functional element of the non-deterministic behavior, data exchange protocol configurations for the set of executables and runtime process orchestration information specifying at least one processing relationship for the set of executables. The set of executables comprises one or more sensor control modules, one or more actuator control modules and one or more behavior algorithm modules. The runtime process orchestration information, obtained by the compute node, comprises information specifying how sensor data obtained via the sensor control modules is to be processed by the behavior algorithm modules to generate adaptive actuator control instructions for the actuator control modules.

For instance, the set of executables corresponding to the path information may comprise one or more sensor control modules, one or more actuator control modules and one or more behavior algorithm modules. Further, the runtime process orchestration information may comprise information specifying how sensor data (e.g., sensor data received during runtime, which is associated with a dynamically changing environments including other robotic systems, humans, etc.) obtained via the sensor control modules is to be processed by the behavior algorithm modules to generate adaptive actuator control instructions for the actuator control modules.

Using such configurations files that tell a robotic system in a unique and immutable manner where it can obtain the components (i.e., the executables) required for assembling a complex control program needed for performing a non-deterministic behavior that adapts to a dynamically changing environment greatly improves efficiency and stability of large-scale deployment of robot control programs.

For instance, executables that implement important functional elements (e.g., object recognition modules, device drivers, etc.) that individually may be relevant for a plurality of different control programs and thus for robot behaviors can be generated, tested and stored in remote storage and be referenced in many different configuration files for many different behaviors that in turn can be downloaded to many different robotic systems.

The structure of the configuration file as described above and below ensures that the associated executable is always identical, independent from the individual robotic system and / or the individual control program etc. The individual robotic system only needs to be enabled, e.g., via a process orchestration module or similar technology, to read the configuration file and to use the information contained therein to assemble all necessary program components and configure them to interact as specified during runtime.

In this manner, configuration of robotic systems to carry out a complex non-deterministic behavior can simply be triggered by loading a configuration file that comprises several orders of magnitude less data than the actual control program that is assembled and executed based on the configuration file.

Some implementations may further include, determining, by the compute node, that the set of executables associated with the unique and immutable path information contains at least one containerized executable (i.e., an executable that is embedded in an isolated runtime environment) and obtaining, by the compute node, for the at least one containerized executable an isolated runtime configuration and unique and immutable path information for an element of an isolated runtime environment (e.g. a dependent software library needed for isolated execution by the operating system (OS) kernel of the robotic system) associated with the at least one containerized executable and wherein generating the configuration file, by the compute node, further uses the obtained isolated runtime configuration and the obtained unique and immutable path information for the element of the isolated runtime environment.

Thus, in such a situation the generated configuration file may also include unique and immutable path information for elements of the isolated runtime environment of each containerized executable of the first set of executables and configuration parameters that are needed to specify the isolated runtime environments.

For example, each isolated runtime configuration may comprise one or more of: a security access policy, a processing resource utilization restriction and a memory utilization restriction for the isolated runtime environment.

Using such configuration files for control programs that consist of interdependent and possibly containerized executables has the additional advantage that each isolated runtime environment can be easily configured depending on hardware and / or security constraints given by a certain robotic system and / or application scenario. For instance, the structure of the configuration files disclosed herein allows fast and flexible modification of the insolated runtime environment for the same containerized executable or set of interdependent set of containerized executables.

In this manner, security, flexibility and robustness of robotic system configuration is substantially improved.

Some implementations may further comprise, obtaining, by the compute node, unique and immutable path information for a configuration template file of an executable of the set of executables; and wherein the configuration template file comprises unique and immutable path information for the executable and, optionally, unique and immutable path information for elements of an isolated runtime environment of the executable.

In some implementations, the configuration template file may further comprise default execution parameters to be passed to the executable of the set of executables upon execution and / or a default isolated runtime configuration for the associated isolated runtime environment.

In this case, the method discussed above may further comprises obtaining, by the compute node, data specifying deviations from the default execution parameters and / or from the default isolated runtime configuration; and wherein generating the configuration file, by the compute node, further uses the obtained data.

In this manner, the size of the configuration file, and more importantly, the effort in generating it can further be reduced since configuration files can be generated via linking preconfigured configuration template files that contain all necessary path information and default configuration parameters for including the associated executable into a complex control program. Only the path information for the configuration template files and, if needed, deviations from the default configuration of the configuration template files needs to be included in the configuration template file.

For example, the unique and immutable path information included in the configuration file and the configuration template file may comprise unique and immutable Uniform Resource Locators, URLs, pointing to an executable and / or an isolated runtime environment element for a containerized executable stored in a remote storage.

Importantly, the combination of containerization and configuration files as discussed herein ensures cross-platform compatibility with improved security and reduced deployment costs.

As discussed in more detail herein, this nested structure of configuration files and corresponding configuration template files also facilitates fast and easy control program generation, e.g., via a graphical user interface, without requiring advanced programming skills. For example, to configure a robot for even more complex behaviors, possibly approaching human level behaviors, configuration files may also reference, e.g., via unique and immutable URLs, other simpler configuration files, which in turn reference configuration template files including the default configuration parameters for isolated runtime set up and execution of the referenced executable.

In a further aspect, the present disclosure includes a computing system, comprising one or more compute nodes comprising memory and a processor, wherein the compute nodes are configured to transmit, via a network, data to a terminal device and / or to a robotic system and wherein the one or more compute nodes are configured to carry out the method as discussed above.

For instance, such a computing system may be a cloud computing system accessible via a browser interface and the computing system may also be configured for providing the generated configuration file for download to a terminal device and / or the robotic system.

Such a system greatly benefits large scale deployment and reconfiguration of complex control programs, e.g., to fleets of many different types of robotic systems via a single unified system. If each robotic system is capable of using the configuration files disclosed herein, it is sufficient to download such a configuration file to each robotic system.

Thus, the computing system that manages and deploys the configuration files can be designed as lean as possible since storage and retrieval of the actual program code is outsourced to a remote storage and the robotic systems.

In addition, a system using containerized executables simplifies the installation process. Since a container may include all necessary binaries required for execution, a containerized executable may not depend on other binaries. Thus, it may be prevented that updating of other software components affects the behavior and / or execution of a containerized executable that includes all modules required for execution.

The present disclosure also relates to a computer program comprising instructions, which when executed by a computing system, cause the computing system to carry out the method for generating a configuration file as discussed above. Such a computer program may further comprise instructions for providing, by the computing system, the generated configuration file for download to a terminal device and / or to a robotic system.

As discussed above, a further aspect of the present disclosure relates to a method for configuring a robotic system for execution of a non-deterministic and adaptive behavior, the method comprises downloading a configuration file as discussed above and may further comprise downloading the set of executables and, optionally, the isolated runtime environment element needed for execution of the non-deterministic and adaptive behavior using the unique and immutable path information included in the configuration file.

Some implementations may further comprise configuring the I/O interfaces of the set of executables based on the data exchange configuration included in the configuration file.

The present disclosure also includes a robotic system comprising one or more sensors and actuators and processing circuitry operably connected to memory, a networking interface and to the one or more sensors and actuators, wherein the robotic system is configured to carry out the configuration method using the configuration files as discussed above. A related computer program is also part of the present disclosure.

Further advantages of the configuration file structure discussed above (and in more detail in section 5. Below) include that multiple instances of the same (containerized) executable (e.g., camera module, actuator control module, etc.) can be configured via a single file including a single path but different sets of configuration parameters. Further, a single configuration file or dependent configuration template file may reference multiple containers optimized for different hardware configurations (e.g., a different CPU / GPU architecture).

This allows the robotic system to load the correct containers for its respective hardware configuration and the control program developer to generate control programs in a hardware-agnostic manner.

### Aspects relating to efficient behavior transitions

Some prior art systems, such as robotic systems using ROS, treat the control program of a robotic system as a large set of executables corresponding to processing nodes that send messages to each other and that are permanently alive and running and thus permanently consuming memory and processor usage. In industrial robotics and similar systems, conventionally, there are always entities called programmable logic controller, PLCs, that deterministically maintain the state of the system and deterministically control system operations as coded. This allows a clear understanding of what the robotic system is doing at a specific point in time and tracing what it was doing in the past in order to debug the system. However, such PLCs are not capable of functioning in modern complex and non-deterministic automation environments, such as warehouses and manufacturing facilities that inevitably include non-foreseeable (during compile time) uncertainties caused, for example, by human-robot co-working conflicts etc.

To overcome some of these and related short-comings of the prior art, a further aspect of the present disclosure relates to a method for operating a robotic system, the robotic system comprising one or more sensors and actuators operably connected to memory and processing circuitry, the method comprising operating the robotic system in a first non-deterministic and adaptable behavior by executing a first set of interdependent executables, each executable of the first set of executables implementing a functional element of the first non-deterministic and adaptable behavior, receiving, by a first monitoring executable associated with the first non-deterministic and adaptable behavior, first data from one or more executables of the first set of interdependent executables, analyzing the received first data, generating, by the first monitoring executable and based on the analyzing the received first data, a first transition trigger.

The method further comprising transitioning, based on the first transition trigger, the robotic system into a second non-deterministic and adaptable behavior, operating the robotic system in the second behavior by executing a second set of interdependent executables by determining one or more executables of the first set of interdependent executables to be ceased and ceasing execution of the one or more executables of the first set of interdependent executables of the first non-deterministic and adaptable behavior determined to be ceased.

For instance, such executables may comprise one or more sensor modules, one or more actuator modules and / or one or more behavior algorithm modules.

Alternatively or additionally, the method further comprises determining one or more first additional executables of the second set of interdependent executables to be started and starting execution of the one or more first additional executables associated with the second non-deterministic and adaptable behavior.

In this manner, robotic systems can execute complex series of complex behaviors while only providing system resources (memory, processing time, devices, etc.) for the processes / executables that are actually needed for execution of the respective behavior that is currently active. For instance, processes needed for charging a battery of an AMR only need to be active while the AMR is in the charging station and could be deactivated when the AMR leaves the charging station to resume normal operation, such as logistic support in a warehouse setting.

At the same time, executables that implement a battery monitoring function may be required during charging (first behavior) and during the normal operation (second behavior). Thus, aspects of the present disclosure allow that not all executables of the first set of executables are terminated when the AMR leaves the charging station but can also be kept active - potentially using a different runtime and / or containerization configuration.

In this manner, resource utilization during execution of a certain behavior and processing effort for reconfiguration of the active runtime code can be kept low simultaneously.

Some implementations may include a further step of starting a second monitoring executable associated with the second non-deterministic and adaptable behavior.

Further implementations may include, receiving, by the second monitoring executable associated with the second non-deterministic and adaptable behavior, second data from one or more executables of the second set of interdependent executables, analyzing the received second data, generating, by the second monitoring executable associated with the second non-deterministic and adaptable behavior, based on the analyzing the received second data, a second transition trigger, transitioning, based on the second transition trigger, the robotic system into a third non-deterministic and adaptable behavior, operating the robotic system in the third non-deterministic and adaptable behavior by executing a third set of interdependent executables by determining one or more executables of the second set of interdependent executables of the second non-deterministic and adaptable behavior to be ceased, ceasing execution of the one or more executables of the second set of interdependent executables of the second non-deterministic and adaptable behavior and / or determining one or more second additional executables of the third set of interdependent executables of the third non-deterministic and adaptable behavior to be started and starting execution of one or more third additional executables associated with the third non-deterministic and adaptable behavior.

Starting a third monitoring executable associated with the third non-deterministic and adaptable behavior may also be part of the methods disclosed herein. Alternatively or additionally, the second monitoring executable may also trigger a transition to the first behavior. In other words, it is also possible that two or more compatible behaviors or the robotic system may be active at the same time.

In this manner, complex partially linear and also partially circular behavior patterns of the robotic system can be realized while keeping memory and processing overhead, and therefore power source drainage, low.

Some implementations may further comprise obtaining, from a configuration file, a first set of dependencies between the first monitoring executable and the first set of interdependent executables, wherein the determining one or more executables of the first set of interdependent executables of the first non-deterministic and adaptable behavior to be ceased is based on the obtained first set of dependencies. Further such implementations may further comprise obtaining, from the configuration file, a second set of dependencies between the second monitoring executable and the second set of interdependent executables, wherein the determining one or more first additional executables of the second set of interdependent executables of the second non-deterministic and adaptable behavior to be started is based on the obtained second set of dependencies.

In this manner, the robotic system is enabled to efficiently determine which executables can be ceases and which should be maintained because they are needed again for execution of the second behavior. In addition, using such recursive dependencies between monitoring executables and functional element executables of a non-deterministic and adaptive behavior keeps configuration and / or control data traffic as low as possible.

For instance, ceasing execution of the executables may comprises one of temporarily suspending the one or more executables or permanently suspending the one or more executables. In this manner memory and processing resources assigned to the respective executables can be released and used for other processes.

Some implementations may further comprise obtaining the first set of interdependent executables and the first monitoring executable from the memory of the robotic system and / or via a network from a remote storage.

Some implementations may further comprise obtaining the second set of interdependent executables and the second monitoring executable from the memory of the robotic system and / or via a network from a remote storage.

Further, generating the first and second transition trigger comprises determining that the received first or second data match a preconfigured trigger condition.

Moreover, executing the first set of interdependent executables may comprise: instantiating an isolated runtime environment; and executing at least one of the first set of interdependent executables in the isolated runtime environment. And ceasing execution may further comprises terminating the isolated runtime environment.

Thus, system resources that were assigned for the isolated runtime environment (e.g., memory resources storing OS libraries and dependencies required to run the code consistently on any infrastructure) can also be released in a flexible and dynamic manner dependent on different behavior transitions of the robotic system.

Naturally, such an instantiation of an isolated runtime environment may be performed for any containerized executable of any set of executables.

Further, the isolated runtime environment may also be associated with an isolated runtime configuration comprising one or more of: a security access policy, a processing resource utilization restriction and a memory utilization restriction for the isolated runtime environment.

In this manner, executables may be reused for a new behavior of the robotic system while security and hardware constraints may be optimized for the new behavior. For instance, access to device or networking drivers that are not needed during charging may be restricted to improve security. Similarly, hardware utilization of some containerized executables may be restricted during execution of a set of many complex interdependent nodes to ensure that the robotic system does not run into a resource overflow state.

It should be noted that aspects discussed above for transitioning from a first to a second behavior can also applied for subsequent transitions from the second behavior to a third behavior or back to the first behavior.

A further aspect of the present disclosure relates to a robotic system comprising one or more sensors and actuators operably connected to memory and processing circuitry, wherein the robotic system (e.g., an AMR, an industrial automation robot, etc.) is configured to carry out the method as discussed above. A corresponding computer program is also part of the present disclosure.

### Further aspects regarding behavior modelling of robotic systems

A further aspect of the present disclosure relates to a computer-implemented method for generating a model representing the behavior of a robotic system, the method comprising selecting, from a set of processing node templates, a first and a second processing node, wherein the first and second processing nodes are each associated with an executable implementing a functional element of a control program for the robotic system, attaching an output of the first processing node to an input of the second processing node, wherein the attaching the output of the first processing node to an input of the second processing node further comprises, determining, based on an interface specification of the input of the second processing node and the output of the first processing node, whether the input of the second processing node and the output of the first processing node are connectable.

If it has been determined that the input of the second processing node and the output first processing node are connectable, connecting the input of the second processing node and the output of the first processing node and if it has been determined that the input of the second processing node and the output of the first processing node are not connectable, refraining from connecting the input of the second processing node and the output of the first processing node.

For instance, the interface specification may comprise one or more of: an I/O configuration of a publish-subscribe data exchange protocol (e.g., ROS topics or services), an I/O interface configuration of a message-queue data exchange protocol, a remote procedure call (e.g., synchronous or asynchronous remote procedure calls) and an I/O configuration of a port-based data exchange protocol (e.g. a TCP/IP configuration).

In this manner, models representing complex robotic behaviors can be generated in a fast, efficient and natural manner - even by industrial automation engineers that may not be versed in programming languages conventionally used for robotic system configuration (e.g., ROS etc.). Further, complex processing relationships between a variety of interconnected executables can be modeled while ensuring that processing relationships that may lead to program failure, such as protocol type or payload type conflicts can be avoided from the beginning. Further, such models can readily be used for generating nested configuration files for robotic system configuration as discussed above and in section 5. below.

Some implementations may further comprise selecting, from the set of processing node templates, a third and a fourth processing node, wherein the third and fourth processing node are each associated with an executable implementing a functional element of the control program for the robotic system, attaching an output of the third processing node to an input of the fourth processing node, wherein the attaching the output of the third processing node to an input of the fourth processing node may further comprise determining, based on an interface specification of the input of the fourth processing node and the output of the third processing node, whether the input of the fourth processing node and the output of the third processing node are connectable. If it has been determined that the input of the fourth processing node and the output third processing node are connectable, connecting the input of the second processing node and the output of the first processing node. If it has been determined that the input of the fourth processing node and the output of the third processing node are not connectable, refraining from connecting the input of the fourth processing node and the output of the third processing node.

In some aspects, the method discussed above may further comprise selecting a first and second state node, each state node representing a non-deterministic and adaptable behavior of the robotic system, connecting the first and second state node by a representation of a transition, associating the first and second processing node with the first state node and associating the third and fourth processing node with the second state node.

Some implementations may further comprise connecting an output of at least one of the first and second processing node associated with the first state node to the representation of the transition such that the transition is triggered, depending on the data provided by the output of the at least one of the first and second processing node the data provided.

In this manner, ever more complex robotic system behaviors that may involve non-deterministic transitions - as discussed above - may be modeled and the resulting models may be used for (nested) configuration file generation as also discussed above.

Further each processing node comprises default configuration parameters passable to its associated executable upon execution of the associated executable by the robotic system and some implementations may include modifying the default configuration parameters based on received input characterizing modified configuration parameters.

In this manner, the generated models may not only correctly capture / represent processing and data exchange relationships between the associated executables but may also allow reconfiguring runtime parameters.

In particular, some implementations may include associating the executable associated with a processing node with an isolated runtime environment configuration, wherein the isolated runtime environment configuration comprises default isolated runtime configuration parameters.

Further aspects may include modifying the default isolated runtime configuration parameters based on received input characterizing modified isolated runtime configuration parameters.

So, the behavior models and the resulting configuration files may fully represent complex robotic system behaviors build from containerized executables and may even allow for fast and efficient reconfiguration of individual containerization configurations as also discussed above.

Thus, in essence, by using robotic system behavior models and the related methods as discussed above allows to substantially reduce development, debugging and reconfiguration time for control programs defining complex non-deterministic and adaptive behaviors of a robotic system.

A further aspect of the present disclosure relates to a computing system, comprising one or more compute nodes comprising memory and a processor, wherein the one or more compute nodes are configured to carry out the model generation methods as discussed above. As for the further aspects discussed above a corresponding computer program is also part of the present disclosure.

### 4. Short Description of the Figures

Various aspects and implementation details of the present disclosure are described in more detail in the following by reference to the accompanying figures. These figures show:
**Fig. 1****:** example implementations of two types of robotic systems according to some aspects of the present disclosure.
**Fig. 2****:** a robotic system and components of the robotic system according to some aspects of the present disclosure.
**Fig. 3****:** an illustration of a computing system for configuring a robotic system according to aspects of the present disclosure.
**Fig. 4****:** an illustration of a robotic system being configured for execution of a complex non-deterministic behavior according to aspects of the present disclosure.
**Fig. 5****:** an illustration of a configuration file according to some aspects of the present disclosure.
**Fig. 6****:** an extract of a model representing the behavior of a robotic system according to some aspects of the present disclosure.
**Fig. 7****:** a further extract of a model representing the behavior of a robotic system according to some aspects of the present disclosure.
**Fig. 8****:** a further extract of a model representing the behavior of a robotic system according to some aspects of the present disclosure.
**Fig. 9****:** a screenshot of an implementation example of a graphical user interface (GUI) usable for generating a model of robotic system behavior according to some aspects of the present disclosure.
**Fig. 10****:** a further screenshot of an implementation example of a GUI usable for modelling a model according to some aspects of the present disclosure.
**Fig. 11****:** a process diagram illustrating a computer-implemented method for generating a configuration file for program code assembly and runtime process orchestration of a computer program defining a non-deterministic and adaptive behavior of a robotic system according to some aspects of the present disclosure.
**Fig. 12****:** a process diagram illustrating a method for operating a robotic system, the robotic system comprising one or more sensors and actuators operably connected to memory and processing circuitry according to some aspects of the present disclosure.
**Fig. 13****:** a process diagram illustrating a computer-implemented method for generating a model representing the behavior of a robotic system according to some aspects of the present disclosure.

### 5. Description of exemplary embodiments

In the following, further aspects of the present disclosure are described in more detail.

### Robotic systems

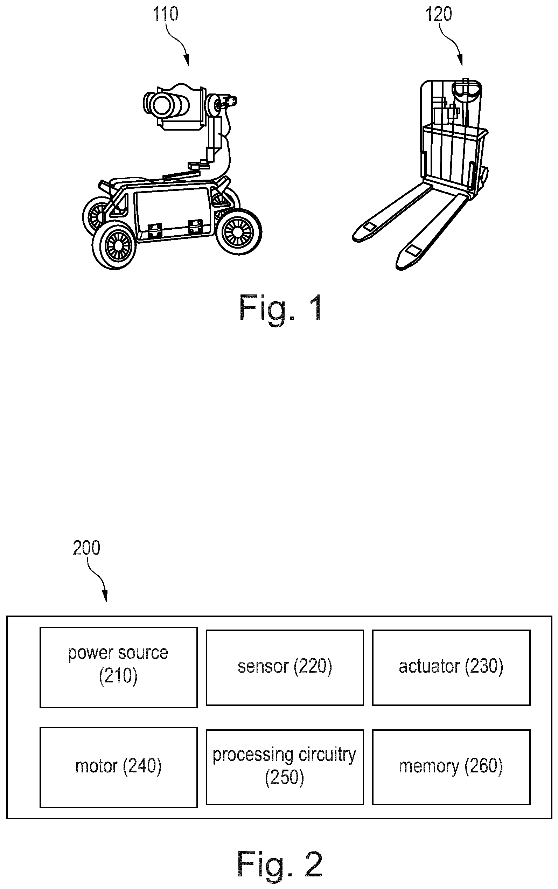

Fig. 1 depicts two example implementations 110 and 120 of a robotic system. Robotic system 110 is an autonomously or semi-autonomously driving vehicle such as an AMR that may comprise, wheels, an engine, a camera and additional sensors and actuators. Robotic system 120 is a fork-lift device that may also operate autonomously or semi-autonomously.

Fig. 2 depicts internal and / or external components of a robotic system 200. A robotic system 200 according to the present disclosure may comprise a power source 210, e.g., in terms of a battery or a similar power generator such as a fuel cell. The structure of robotic system 200 may be used to implement robotic systems 110 and 120. The robotic system 200 may also consist of one or more robotic systems 110, 120.

The robotic system 200 may comprise one or more sensors 220. A sensor 220 may be considered as an input device which provides an output (e.g., in terms of a signal) with respect to a specific physical quantity input to the sensor 220. The one or more sensors 220 may comprise temperature sensors, proximity sensors, accelerometers, infrared (IR) sensors, pressure sensors, light sensors, ultrasonic sensors, smoke sensors, gas sensors, alcohol sensors, touch sensors, color sensors, humidity sensors, position sensors, magnetic sensors (hall effect sensors), sound sensors, tilt sensors, flow and level sensors, pyroelectric infrared (PIR) sensors, and strain and weight sensors. It is to be noted that also other sensor types may be used for implementing the one or more sensors 220.

Furthermore, robotic system 200 may comprise one or more actuators 230. An actuator 240 may be considered as a robotic system part that initiates movements by receiving feedback from a control signal. Once it has power, the actuator 200 creates specific motions depending on the purpose of the robotic system 200. The one or more actuators may comprise linear actuators, rotary actuators, hydraulic actuators, pneumatic actuators, electric actuators, electromechanical actuators, electrohydraulic actuators, mechanical actuators, and supercoiled polymer actuators. It is to be noted that also other actuator types may be used for implementing the one or more actuators 230.

In addition, the robotic system 200 may comprise one or more motors 240. The one or more motors 240 may comprise electric motors and combustion engines. It is to be noted that also other motor types may be used for implementing the one or more motors 240.

The robotic system 200 may further comprise processing circuitry 250 and memory 260. Typical processing circuitry architectures for the use in the area of robotic systems are Intel, ARM and Nvidia. However, also other architecture types may be used for implementing the processing circuitry 250.

Memory 260 of the robotic system 200 may be implemented as Random Access Memory (RAM) and / or Read-Only Memory (ROM). Parts of the memory can be implemented as a cache and / or as a hierarchical cache.

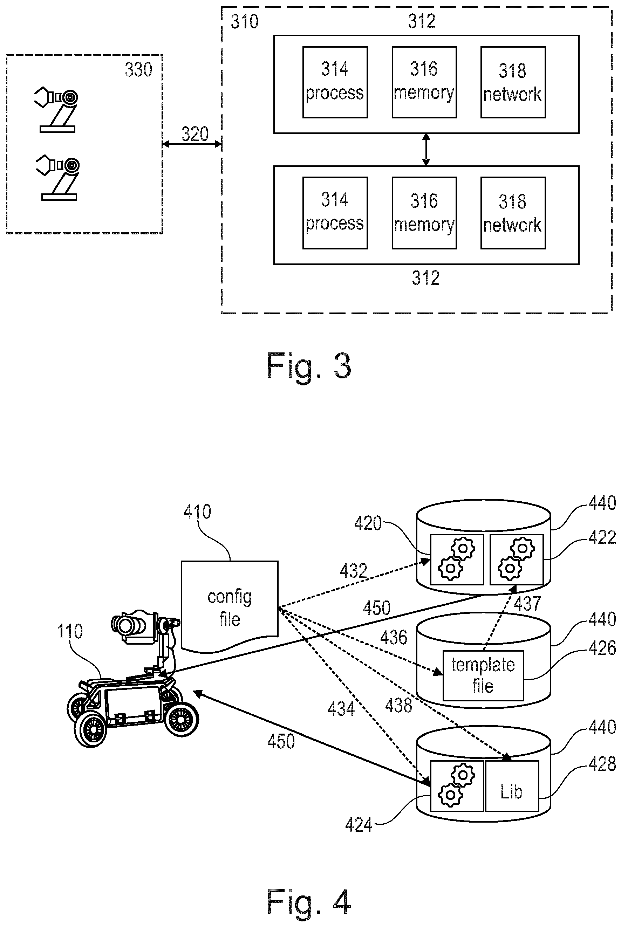

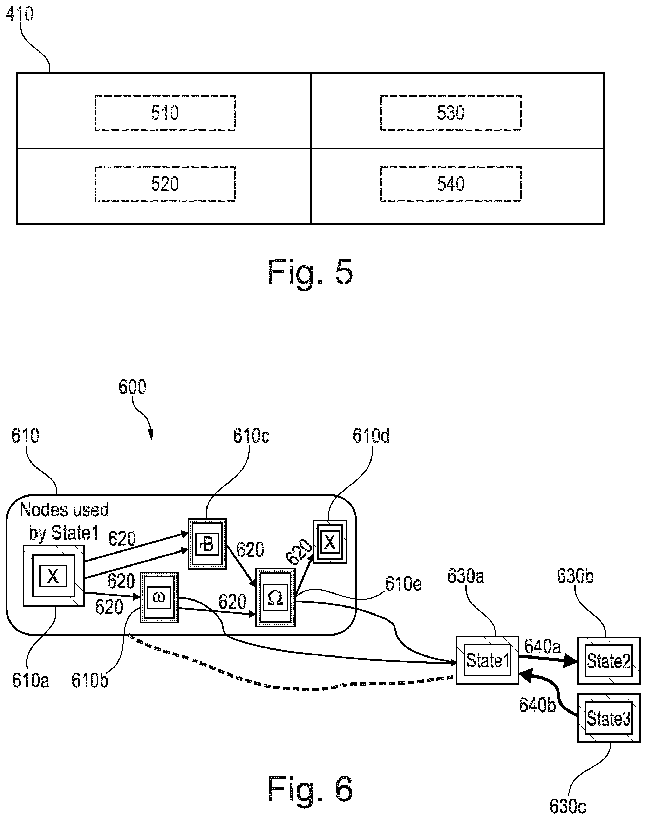

Fig. 3 illustrates a computing system 310 (e.g., a cloud computing system) including one or more compute nodes 312 each providing processing resources 314, memory 316 and networking resources 318 for execution of software, such as the computer programs discussed in section 3 above. The computing system 310 may be connected to a robotic system 330, such as an industrial automation system, which may consist of one or more AMRs. As discussed above, the cloud computing system 310 may be configured to generate, to store and / or to transmit, via the network 320, configuration files (for implementation details see Fig. 4 and Fig. 5) for configuring the robotic system 330. In some implementations, the computing system 310 may also store configuration template files, executables and containerization elements and may thus act as a remote storage system.

Fig. 4 illustrates how a robotic system 110 that comprises one or more sensors and actuators, processing circuitry (e.g., a one or more CPUs, DSPs, GPUs, single-board microcontrollers, NPUs, VPUs etc.), memory and a networking interface (e.g., a wireless IEEE 802.11 or 5G interface, etc.) can be configured for execution of a complex non-deterministic and adaptive behavior according to some aspects of the present disclosure. As discussed above, with reference to Fig. 3, the robotic system 110 may receive a configuration file 410 (for further details see Fig. 5) *inter alia* comprising unique and immutable path information for a set of executables 420 collectively containing program code for execution of the non-deterministic and adaptive behavior. As illustrated in Fig. 4, the configuration file 410 may contain path information 432, such as a unique and immutable URL pointing directly to an executable 420 stored in a remote storage device, or system 440 accessible by the robotic system 110 via a network connection 450.

The configuration file 410 may also include a URL pointing to another configuration file such as a configuration template file 426, which *inter alia* includes a further URL 436 pointing to the executable 422. The configuration file 410 may further comprise a URL pointing to a containerized executable 424, which is embedded into an isolated runtime environment that may include elements such as an OS library 428 among other dependent elements. The configuration file 410 thus may also contain a URL 438 pointing to such elements needed for the isolated runtime environment.

Based on immutable and unique path information, the robotic system 110 may download all elements needed for assembly, compilation and execution of the control program defining the non-deterministic and adaptable behavior.

Fig. 5 illustrates the structure of a configuration file 410 that according to some aspects of the present disclosure, which contains information needed for program code assembly and runtime process orchestration of a robotic system 110, 120, 200, 330. As discussed above, such a file includes unique and immutable path information 510 for a set of executables, some of which or all may be individually containerized. In such a situation, the configuration file 410 may also comprise unique and immutable path information for the containerization elements. Further, the configuration file 410 may comprise data exchange protocol configurations 520 for the set of referenced executables such as a TCP/IP configuration of a motor driver module, a ROS topic, or service configuration etc. For instance, during program code assembly and compilation, the robotic system 110, 120, 200, 330 may use the data exchange protocol configurations to ensure that executables / processes can properly exchange data with each other. The configuration file 410 may further include runtime process orchestration information 530 that define processing relationships for the referenced executables during runtime. The configuration file 410 may further comprise various configuration parameters 540, as discussed in more detail in section 3. above.

A robotic system 110, 120, 200, 330 as described with reference to Fig. 2 to Fig. 4 may include a program assembly and process orchestration module that is configured for reading configuration files 410 and use the information for assembling, compiling, configuring and executing the control program code collectively provided by the referenced executables. Before such a module downloads an executable or secondary configuration file 410 from a remote storage, it may also check whether the respective files or executables are already in memory of the robotic system 110, 120, 200, 330.

For complex control programs with many interdependent nodes, the program assembly and process orchestration module may need to resolve interface conflicts based on the data exchange protocol configurations contained in the configuration file 410.

A further aspect of the present disclosure is thus directed to a method performed by a robotic system 110, 120, 200, 330, comprising the following steps: obtaining a configuration file 410 as discussed above and determining resolved data exchange configurations for the referenced executables, wherein determining the resolved data exchange configurations for the executables comprises resolving, a mismatch between the data exchange protocol configurations of a connected first and second executable.

For instance, resolving the mismatch between the data exchange configurations of a connected first and second executable may further comprise modifying the first and / or the second data exchange configuration and / or inserting a data exchange protocol translation process between the first and the second connected executable.

Some implementations of such a method may further comprise modifying the data exchange protocol configuration of two of three connected executables, depending on the connection topology of the connected processing nodes.

In addition, conflicts between four interconnected executables may be resolved by inserting a protocol configuration translation process into one of the connections of the connected executables. As discussed herein, the data exchange protocol configurations may comprise one or more of: a configuration of a publish-subscribe data exchange protocol, a configuration of a message-queue data exchange protocol and a configuration of a port-based data exchange protocol, such as TCP/IP.

### Aspects regarding generating a model representing the behavior of a robotic system

Fig. 6 depicts an extract 600 of a model representing the behavior of a robotic system 110, 120, 200, 330. The model may be composed by means of a graphical user interface (GUI) provided by a computing system 310, e.g., by a computing cloud or a remote server. The GUI may be accessed by means of a web browser. The extract 600 of the model shows a node flow 610, also sometime referred to as flow, that comprises five processing nodes 610a, 610b, 610c, 610d and 610e. In addition, the extract 600 shows state nodes 630a, 630b and 630c. The processing nodes 610a, 610b, 610c, 610d and 610e are representations, e.g., visual representations, of executables. Thus, each processing node 610a, 610b, 610c, 610d and 610e may be associated with one or more executables. An executable may implement a specific task performed by a robotic system 110, 120, 200, 330, like reading images from a camera device, controlling an engine of the robotic system 110, 120, 200, 330, reading input data from one or more sensors 220 or controlling the behavior of one or more actuators 230, like a robot arm etc. Each processing node 610a, 610b, 610c, 610d and 610e may have an I/O interface that may provide at least one input to the processing node 610a, 610b, 610c, 610d, 610e and at least one output of the processing node 610a, 610b, 610c, 610d, 610e. It is to be noted that the I/O interface of a processing node 610a, 610b, 610c, 610d, 610e may only have an input or only an output. The input may be used to receive data and / or parameters from another processing node 610a, 610b, 610c, 610d, 610e or from an external event, e.g., initiated by a user. The output may be used to pass data and / or parameters to other processing nodes 610a, 610b, 610c, 610d, 610e, indicated by arrows 620.

A node flow 610 may be generated by selecting a processing node 610a, 610b, 610c, 710d, 610e from a set of templates. The templates may be stored in a template pool comprising an arbitrary number of predefines processing nodes 610a, 610b, 610c, 610d, 610e. The processing nodes 610a, 610b, 610c, 610d, 610e may be placed into a specific order by connecting the inputs and outputs of the processing nodes 610a, 610b, 610c, 610d, 610e, indicated by arrows 620. Both the processing nodes 610a, 610b, 610c, 610d, 610e and the arrows 620 may be created by using a mouse acting on the aforementioned GUI. Hence, the individual items may be placed, moved and or removed by drag & drop operations.

Each processing node 610a, 610b, 610c, 610d, 610e may be associated with a set of generic parameters according to the following listing:
- Node Info
   ∘ Title, short text description
   ∘ Long description in MarkDown with base64 embedded images
- The type of binary:
   ∘ Normal - any executable such as HAProxy, Redis, Ignition
   ∘ ROS1 Node - requires pre-setting ROS parameter server
   ∘ MOV Node - has editable callbacks + may also be a ROS1 Node
   ∘ DLL - requires to bridge containers to allow dynamic loading
- The type of container:
   ∘ Docker, Podman, Snaps, None
- URL(s) to the node's container image, one per architecture (if the type is not None)
   ∘ dockerhub:/user/AMCL,amd64:2.1
   ∘ dockerhub:/user/AMCL,amd64-cuda:2.1
   ∘ portus.mov.ai:~user/AMCL/arm64/2.1
   ∘ portus.mov.ai:~movai/MOVNode/arm32/3.4.5
   ∘ (one URL per architecture)
- The path to the binary executable (within the container if not type None)
   ∘ /opt/ros/noetic/bin/amcl
- The path to the graceful process killer (within the container if not type None)
   ∘ /usr/ros/noetic/bin/rosl_amclkiller
   ∘ params: process ID, seconds before SIGKILL
- Execution argc/argv Command line parameters.
   ∘ -p 23 -param=23
- Execution Environment variables
   ∘ MYPATH=/usr/local/lib/:/lib , DEBUG=TRUE
- Required permissions for accessing HW devices files and
   ∘ /dev/camera1 , /proc
   ∘ DBUS:bluetooth
   ∘ TCP:76, TCP:11311
   ∘ (no permissions should be implied from the Protocol definitions below because the Flow Initiator is oblivious to the inner works of protocols. It needs to be explicitly informed of any special permission requirements. The end-user can choose to block or change those permissions)

The executable associated to a processing node 610a, 610b, 610c, 610d, 610e may be compiled for different computer architectures, like Intel, ARM. Nvidia etc.

Each of the parameters of the generic parameter list may be overwritten by modified parameters to be able to customize the configuration of a processing node 610a, 610b, 610c, 610d, 610e.

During modelling, when for example the output of processing node 610a is connected to the input of processing node 610b, it may be checked whether the output and the input are connectable. This may involve checking whether the output and the input operate according to the same protocol. This may further involve checking whether the data communicated by the output to the input has the correct format such that it can be interpreted by processing node 610b. If it is determined that the format and / or protocol are correct, i.e., the output and input operate on the same format and on the same protocol, the computing system connects the processing nodes 610a and 610b, wherein the connection represented by an arrow 620, which may be displayed in the GUI. However, if it is determined that the output operates on a protocol that could not be received by the input and / or that the output operates on a data format that cannot be interpreted by the input, then the computing system refrains from connecting the processing node 610a and 610b, which may be displayed on the GUI by not connecting the processing nodes 610a and 610b by means of an arrow 620. The determination whether to connect or not to connect nodes 610a and 610b may be performed based on configuration parameters stored in an interface specification that may be part of the parameter list depicted above. Said configuration parameters may comprise an I/O configuration of a publish-subscribe data exchange protocol, an I/O interface configuration of a message-queue data exchange protocol and an I/O configuration of a port-based data exchange protocol. The determination-based mechanism ensures that only compatible processing nodes are connected, which reduces the likelihood of programming errors since connecting incompatible processing nodes 610a, 610b, 610c, 610d, 610e is prevented.

After having modelled a node flow 610, it may be exported to a configuration file 410, usable to install the node flow 610 on a robotic system 110, 120, 200, 330, which then downloads and executes the executables to implement the function defined by the node flow 610.

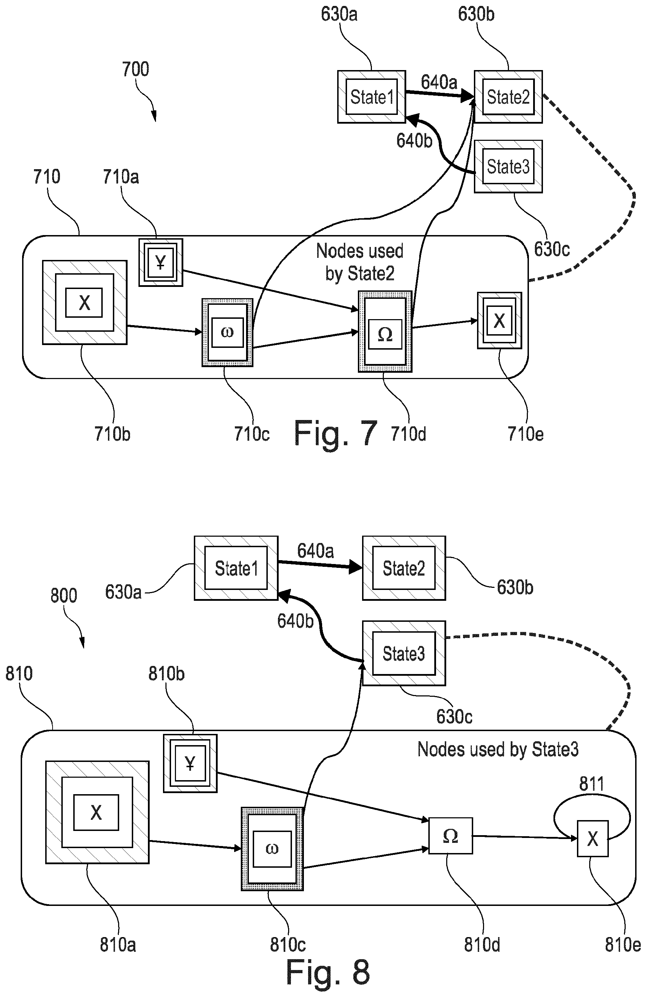

A node flow, e.g., node flow 610, may be associated with a state node 630a, 630b, 630c. According to Fig. 6, node flow 610 is associated with state node 630a, named "State1", whereas node flow 710 according to Fig. 7 is associated with state node 630b named "State2". A state node 630a, 630b, 630c may be considered to answer a question, for example "what is the robot doing now?". The state node 630a, 630b, 630c may answer "I'm looking for an open door". The state nodes 630a, 630b, 630c may be connected by transitions, represented in Fig. 6, 7 and 8 by arrows 640a and 640b. If a transition is triggered, the robotic system 110, 120, 200, 330 may switch from a state node to another state node. According to Fig. 7, assuming that the robotic system 110, 120, 200, 330 is in the state represented by state node 630a, and if transition 640a is triggered, the robotic system 110, 120, 200, 330 may switch to the state represented by state node 630b.

The transition 640a may be triggered depending on the output provided by one or more processing nodes 610a, 610b, 610c, 610d, 610e associated with the corresponding state node 630a, as depicted in Fig. 6. Furthermore, depending on the output, the robotic system 110, 120, 200, 330 may also decide to remain in the state represented by state node 630a.

If the robotic system 110, 120, 200, 330 transitions from "State1" represented by state node 630a to "State2" represented by state node 630b, another node flow may be required. A corresponding other node flow 710 is depicted in Fig. 7 showing a further extract 700 of the model. Said extract 700 shows node flow 710 that is associated with state node 630b, representing "State2". As can be seen, node flow 710 comprises different processing nodes 710a, 710b, 710c, 710d and 710e. By transitioning from "State1" represented by state node 630a to "State2" represented by state node 630b, the executables associated with processing nodes 610a, 610b, 610c, 610d, 610e may be suspended to memory, killed and / or flushed such that they no longer occupy computational resources, like CPU and memory. This ensures (or at least increases the likelihood) that the robotic system 110, 120, 200, 330 has sufficient computational resources for loading and executing the executables associated with processing nodes 710a, 710b, 710c, 710d, 710e of node flow 710.

Assuming that processing nodes 610a and 710b are associated to the same executable, i.e., the processing nodes 610a and 710b are the same, then the robotic system 110, 120, 200, 330 may refrain from suspending / killing / flushing the executable of processing node 610a and may reuse it in node flow 710. This provides for an efficient state change since an unnecessary suspending / killing / flushing and reloading of the corresponding executable may be avoided, which may speed-up the operation of the robotic system 110, 120, 200, 330. In addition, also power may be saved since less computational tasks, required for suspending / killing / flushing and reloading, may have to be executed.

Referring to Fig. 8, depicting a further extract 800 of the model, shows a node flow 810 associated with "State3" represented by state node 630c. The node flow 810 comprises the processing nodes 810a, 810b, 810c, 8910d and 810e. The executables associated with processing nodes 810a, 810b, 810c, 8910d and 810e are brought to execution as outlined with respect to Fig. 6 and Fig. 7, if, for example, transition 640b is triggered to transition from "State1" represented by state node 630a to "State3" represented by state node 630c.

Specifically, Fig. 8 depicts a processing note 810e which receives input from its own output, denoted by arrow 811. It is also possible that a processing node receives input from two or more other processing nodes. This is depicted by processing node 810d which receives input from the outputs of processing nodes 810b and 810c. It is to be noted that the input and outputs of the processing nodes can be connected fully flexible, i.e., each processing node can receive input from a plurality of other processing nodes. In addition, when a processing node receives input from one or more other processing nodes, it may at the same time receive input from its own output.

The executables associated with the processing nodes 610a-e, 710a-e and 810a-e may be associated with a default isolated runtime configuration allowing to execute the associated executables in an isolated runtime environment. This enables the execution of an executable isolated from other executables. To achieve this, the executable may be provided in a container, i.e., the executables are containerized. Containerization may help reduce cybersecurity risks, may help in debugging system related issues and may help in limiting the shared resources of a processing node / executable, such as memory, CPU usage and files. Spawning a new executable of a processing node may be done within a confinement of a single Docker container. If one executable needs to write, e.g., to /proc (which may be a resource of a Linux OS), then the entire set of binaries executed throughout the lifetime of the corresponding node flow will have write access to /proc. Each executable may run in an individual confinement (container) and each executable can have its own binary container-image update frequency to ensure that executables are updated regularly, which further improves security.

To be able to customize to execution of an executable in an isolated runtime environment, the default isolated runtime configuration may be altered and / or modified such that its behavior may be controlled during modelling. This may improve flexibility of the isolated runtime environment mechanism.

A modelled node flow 610, 710, 810 may be reused in different application scenarios. For example, if a node flow 610, 710, 810 describes the reading of pictures of a camera and the subsequent analysis of the pictures, then this node flow 610, 710, 810 may be stored and later used in different application scenarios requiring a corresponding functionality.

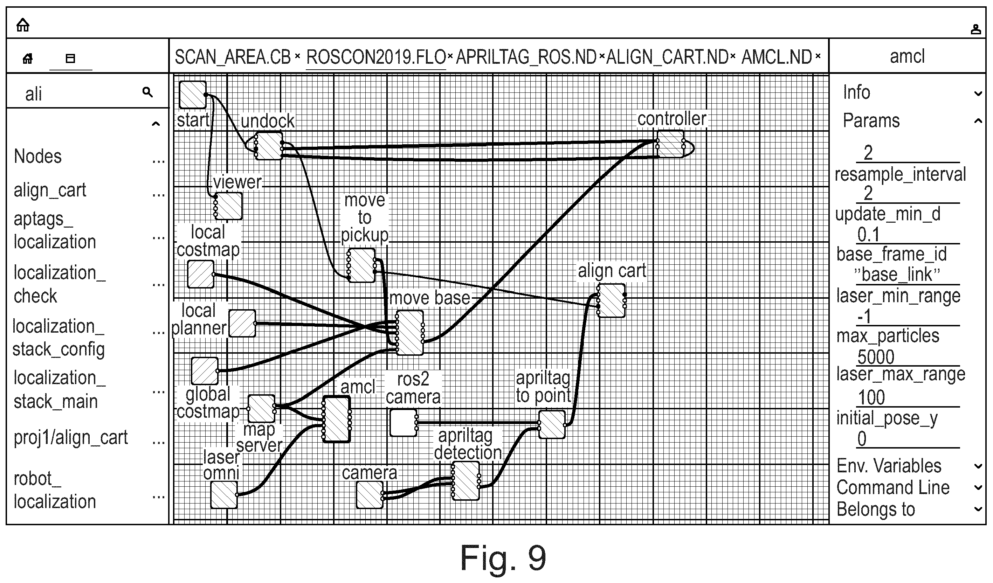

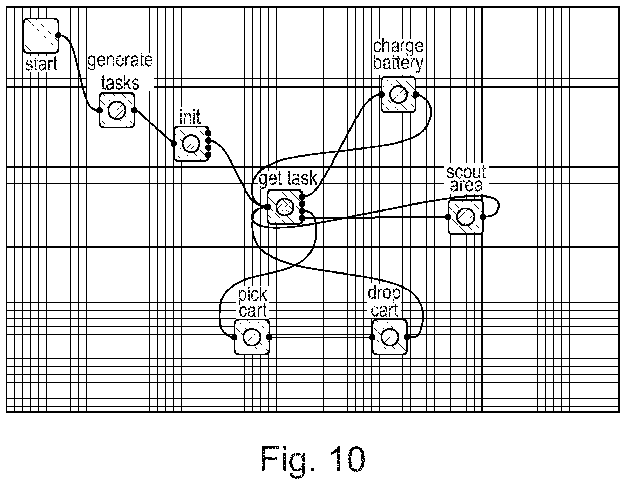

Figs. 9 and 10 depict screenshots of an example implementation of a GUI usable to create a model as outlined with respect to Figs. 6-8.

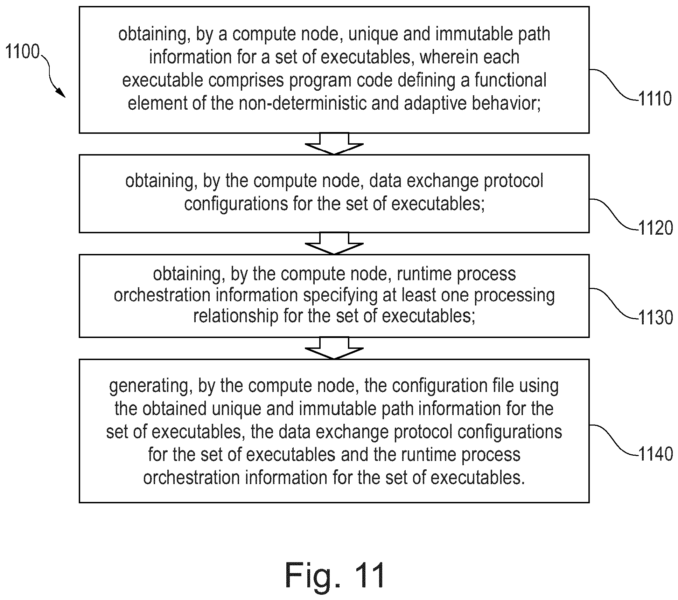

Fig. 11 illustrates a computer-implemented method 1100 for generating a configuration file 410 for program code assembly and runtime process orchestration of a computer program defining a non-deterministic and adaptive behavior of a robotic system 110, 120, 200, 330. At step 1110, the method 1100 comprises obtaining, by a compute node, unique and immutable path information for a set of executables, wherein each executable comprises program code defining a functional element of the non-deterministic and adaptive behavior. At step 1120, the method comprises obtaining, by the compute node, data exchange protocol configurations for the set of executables. At step 1130, the method 1100 comprises obtaining, by the compute node, runtime process orchestration information specifying at least one processing relationship for the set of executables. At step 1140, the method 1100 comprises generating, by the compute node, the configuration file 410 using the obtained unique and immutable path information for the set of executables, the data exchange protocol configurations for the set of executables and the runtime process orchestration information for the set of executables.

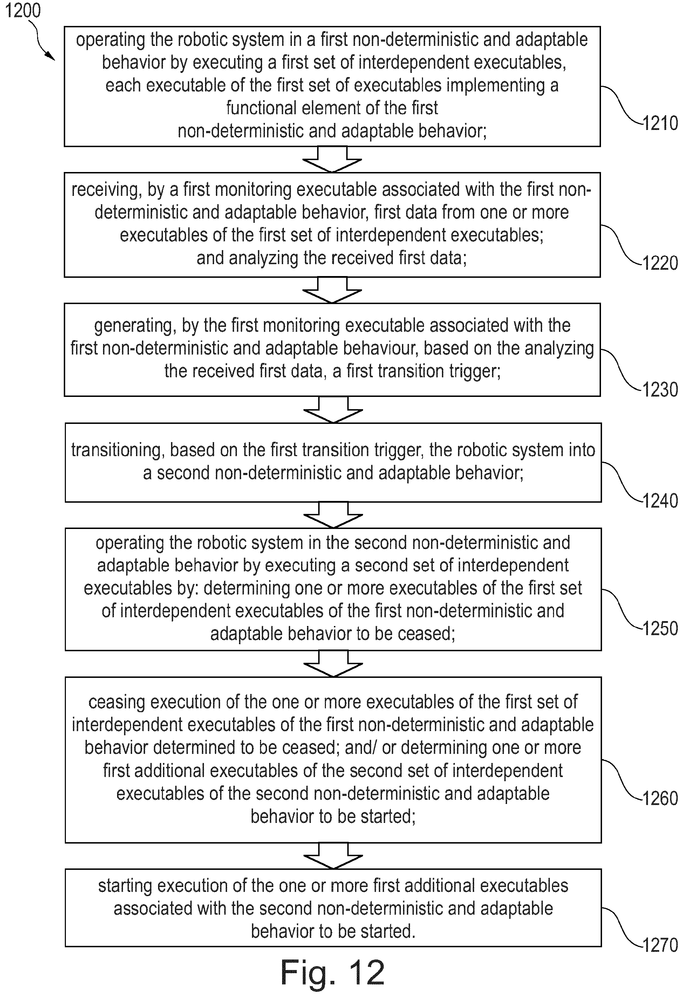

Fig. 12 illustrates a method 1200 for operating a robotic system 110, 120, 200, 330, the robotic system 110, 120, 200, 330 comprising one or more sensors and actuators operably connected to memory and processing circuitry. At step 1210, the method 1200 comprises operating the robotic system 110, 120, 200, 330 in a first non-deterministic and adaptable behavior by executing a first set of interdependent executables, each executable of the first set of executables implementing a functional element of the first non-deterministic and adaptable behavior. At step 1220, the method 1200 comprises receiving, by a first monitoring executable associated with the first non-deterministic and adaptable behavior, first data from one or more executables of the first set of interdependent executables; and analyzing the received first data. At step 1230, the method 1200 comprises generating, by the first monitoring executable associated with the first non-deterministic and adaptable behavior, based on the analyzing the received first data, a first transition trigger. At step 1240, the method 1200 comprises transitioning, based on the first transition trigger, the robotic system 110, 120, 200, 330 into a second non-deterministic and adaptable behavior. At step 1250, the method 1200 comprises operating the robotic system 110, 120, 200, 330 in the second non-deterministic and adaptable behavior by executing a second set of interdependent executables by: determining one or more executables of the first set of interdependent executables of the first non-deterministic and adaptable behavior to be ceased. At step 1260, the method 1200 comprises ceasing execution of the one or more executables of the first set of interdependent executables of the first non-deterministic and adaptable behavior determined to be ceased; and / or determining one or more first additional executables of the second set of interdependent executables of the second non-deterministic and adaptable behavior to be started. At step 1270, the method 1200 comprises starting execution of the one or more first additional executables associated with the second non-deterministic and adaptable behavior to be started.

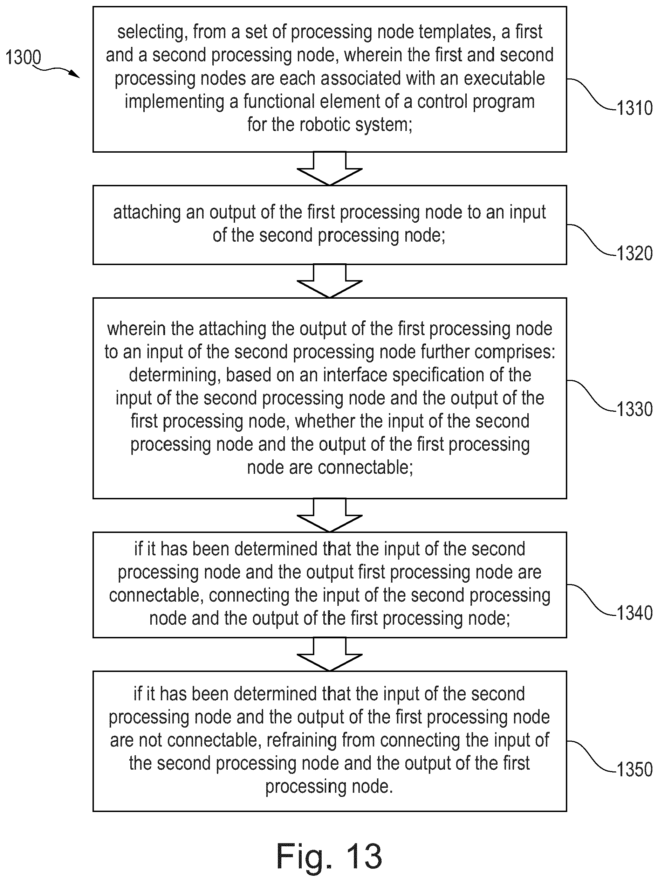

Fig. 13 illustrates a computer-implemented method 1300 for generating a model representing the behavior of a robotic system 110, 120, 200, 330. At step 1310, the method 1300 comprises selecting, from a set of processing node templates, a first and a second processing node, wherein the first and second processing nodes are each associated with an executable implementing a functional element of a control program for the robotic system 110, 120, 200, 330. At step 1320, the method 1300 comprises attaching an output of the first processing node to an input of the second processing node. At step 1330, the method 1300 comprises wherein the attaching the output of the first processing node to an input of the second processing node further comprises: determining, based on an interface specification of the input of the second processing node and the output of the first processing node, whether the input of the second processing node and the output of the first processing node are connectable. At step 1340, the method 1300 comprises if it has been determined that the input of the second processing node and the output first processing node are connectable, connecting the input of the second processing node and the output of the first processing node. At step 1350, the method 1300 comprises if it has been determined that the input of the second processing node and the output of the first processing node are not connectable, refraining from connecting the input of the second processing node and the output of the first processing node.

It is noted that the individual aspects and method steps disclosed herein can be, if reasonable, be combined with other aspects of the present disclosure.

If implemented in software, the functions and methods described herein may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and / or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and / or general register Files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register File for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and / or encoded) thereon, the instructions being executable by one or more processors to perform the operations described herein.

Further, it should be appreciated that modules and / or other appropriate means for performing the methods and techniques described herein can be downloaded and / or otherwise obtained by a terminal device or generic computer. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a terminal device or a generic computer can obtain the various methods upon coupling or providing the storage means to the device. Moreover, any other suitable technique for providing the methods and techniques described herein to a device can be utilized.

Further, the computing systems discussed by the present disclosure may employ standard hardware components (e.g., cloud compute nodes or servers connected to each other via conventional wired or wireless networking technology). In some implementations, application-specific hardware (e.g., circuitry for training neural network models and/ or circuitry for executing trained models, etc.) may also be employed. Further, such computing systems may be configured to execute software instructions (e.g., retrieved from collocated or remote non-transitory memory circuitry) to execute the computer-implemented methods discussed herein.

While specific feature combinations are described in the following paragraphs with respect to exemplary embodiments of the present disclosure, it is to be understood that not all features of the discussed embodiments have to be present for realizing the disclosure, which is defined by the subject matter of the claims. The disclosed embodiments may be modified by combining certain features of one exemplary embodiment with one or more technically and functionally compatible features of other exemplary embodiments. Specifically, the skilled person will understand that features, components, processing steps and / or functional elements of one exemplary embodiment can be combined with technically compatible features, processing steps, components and / or functional elements of any other exemplary embodiment of the present disclosure as long as covered by the specifications of provided by the appended claims.

Moreover, the various embodiments discussed herein can be implemented in hardware, software or a combination thereof. For instance, the various components, elements, subsystems, modules, etc. of the systems disclosed herein may also be implemented via application specific software being executed on multi-purpose data and signal processing equipment such as servers, compute nodes, CPUs, DSPs and / or systems on a chip, SOCs, or similar components or any combination thereof. Some implementations also employ application specific hardware components such as application specific integrated circuits, ASICs, and / or field programmable gate arrays, FPGAs, and / or similar components and / or any combination thereof.

For instance, the various computing (sub)-systems discussed herein may be implemented, at least in part, on multi-purpose data processing equipment such as cloud and / or edge computing servers.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A computer-implemented method (1100) for generating a configuration file (410) for program code assembly and runtime process orchestration of a computer program defining a non-deterministic behavior of a robotic system (110, 120, 200, 330) that adapts to a dynamically changing environment, the method comprising:
obtaining (1110), by a compute node (312), for each executable of a set of executables, unique and immutable path information (510), wherein each executable comprises program code defining a functional element of the non-deterministic behavior;
obtaining (1120), by the compute node, data exchange protocol configurations (520) for the set of executables;
obtaining (1130), by the compute node, runtime process orchestration information (530) specifying at least one processing relationship for the set of executables; and
generating (1140), by the compute node, the configuration file (410) using the obtained unique and immutable path information for the set of executables, the data exchange protocol configurations for the set of executables and the runtime process orchestration information for the set of executables;
wherein the set of executables comprises one or more sensor control modules, one or more actuator control modules and one or more behavior algorithm modules; and
wherein the runtime process orchestration information, obtained by the compute node, comprises information specifying how sensor data obtained via the sensor control modules is to be processed by the behavior algorithm modules to generate adaptive actuator control instructions for the actuator control modules.

2. The method of claim 1, the method further comprising:
determining, by the compute node, that the set of executables contains at least one containerized executable (424);
obtaining, by the compute node, for the at least one containerized executable an isolated runtime configuration (540) for the at least one containerized executable and unique and immutable path information (438) for an element (428) of an isolated runtime environment associated with the at least one containerized executable; and
wherein generating, by the compute node, the configuration file (410) further uses the obtained isolated runtime configuration and the obtained unique and immutable path information for the element of the isolated runtime environment.

3. The method of claim 2, wherein each isolated runtime configuration comprises one or more of: a security access policy, a processing resource utilization restriction and a memory utilization restriction for the isolated runtime environment.

4. The method of any of the claims 1 to 3, the method comprising:
obtaining, by the compute node, unique and immutable path information (438) for a configuration template file (426) of an executable of the set of executables; and
wherein the configuration template file comprises unique and immutable path information (437) for the executable (422) and, optionally, unique and immutable path information for elements of an isolated runtime environment of the executable.

5. The method of claim 4, wherein the configuration template file further comprises:
default execution parameters to be passed to the executable of the set of executables upon execution; and / or
a default isolated runtime configuration for the associated isolated runtime environment; and
the method further comprises:
obtaining, by the compute node, data specifying deviations from the default execution parameters and / or from the default isolated runtime configuration; and
wherein generating the configuration file (410), by the compute node, further comprises uses the obtained data.

6. The method of any of the claims 1 to 5, wherein the unique and immutable path information comprises unique and immutable Uniform Resource Locators, URLs, pointing to an executable and / or an isolated runtime environment element for a containerized executable stored in a remote storage.

7. A computing system (310), comprising:
one or more compute nodes (312) comprising memory (316) and a processor (314);
wherein the one or more compute nodes are configured to transmit, via a network (320), data to a terminal device and / or to a robotic system (110, 120, 200, 330); and
wherein the one or more compute nodes are configured to carry out the method of any of the preceding claims 1 to 6.

8. The computing system of claim 7, wherein the computing system is further configured for providing the generated configuration file (410) for download to a terminal device and / or the robotic system (110, 120, 200, 330).

9. A method for configuring a robotic system (110, 120, 200, 330) for execution a non-deterministic behavior that adapts to a dynamically changing environment, the method comprising:
Downloading, by the robotic system (110, 120, 200, 330), a configuration file (410) generated according to any of the claims 1 to 6.

10. The method of claim 9, further comprising downloading the set of executables (420, 422, 424) and, optionally, the isolated runtime environment element (428) using the unique and immutable path information (432 to 438) included in the configuration file (410), further comprising configuring the data exchange interfaces of the set of executables based on the data exchange configuration included in the configuration file (410).

11. A robotic system (110, 120, 200, 330) comprising:
one or more sensors (220) and actuators (230, 240); and
processing circuitry (250) operably connected to memory (260), a networking interface and to the one or more sensors and actuators; wherein the robotic system (110, 120, 200, 330) is configured to carry out the method of claim 9 or 10.

12. A computer program comprising instructions, which when executed by a robotic system (110, 120, 200, 330) with processing circuitry, causing the robotic system (110, 120, 200, 330) to carry out the method of claim 9 or 10.

13. A configuration file (410) for program code assembly and runtime process orchestration of a computer program defining a non-deterministic behavior of a robotic system (110, 120, 200, 330) that adapts to a dynamically changing environment, the configuration file (410) comprising:
unique and immutable path information (510) for each executable of a set of executables (420, 422, 424), wherein each executable comprises program code defining a functional element of the non-deterministic behavior;
data exchange protocol configurations (520) for the set of executables; and
runtime process orchestration information (530) specifying at least one processing relationship for the set of executables,
wherein the set of executables comprises one or more sensor control modules, one or more actuator control modules and one or more behavior algorithm modules; and
wherein the runtime process orchestration information, obtained by the compute node, comprises information specifying how sensor data obtained via the sensor control modules is to be processed by the behavior algorithm modules to generate adaptive actuator control instructions for the actuator control modules.

## Patentansprüche

1. Ein Computerimplementiertes Verfahren (1100) zum Erzeugen einer Konfigurationsdatei (410) zur Programmcodezusammenstellung und Laufzeitprozessorchestrierung eines Computerprogramms, das ein nichtdeterministisches Verhalten eines Robotersystems (110, 120, 200, 330) definiert, das sich an eine sich dynamisch verändernde Umgebung anpasst, das Verfahren umfassend:
Erhalten (1110), durch einen Rechenknoten (312), für jede ausführbare Datei eines Satzes von ausführbaren Dateien, von eindeutiger und unveränderlicher Pfadinformation (510), wobei jede ausführbare Datei Programmcode umfasst, der ein Funktionselement des nichtdeterministischen Verhaltens definiert;
Erhalten (1120), durch den Rechenknoten, von Datenaustauschprotokollkonfigurationen (520) für den Satz von ausführbaren Dateien;
Erhalten (1130), durch den Rechenknoten, von Laufzeitprozessorchestrierungsinformation (530), die mindestens eine Verarbeitungsbeziehung für den Satz von ausführbaren Dateien spezifiziert; und
Erzeugen (1140), durch den Rechenknoten, der Konfigurationsdatei (410) unter Verwendung der erhaltenen eindeutigen und unveränderlichen Pfadinformation für den Satz von ausführbaren Dateien, der Datenaustauschprotokollkonfigurationen für den Satz von ausführbaren Dateien und der Laufzeitprozessorchestrierungsinformation für den Satz von ausführbaren Dateien;
wobei der Satz von ausführbaren Dateien ein oder mehrere Sensorsteuermodule, ein oder mehrere Aktuatorsteuermodule und ein oder mehrere Verhaltensalgorithmusmodule umfasst; und
wobei die Laufzeitprozessorchestrierungsinformation, die durch den Rechenknoten erhalten wird, Information umfasst, die spezifiziert, wie Sensordaten, die über die Sensorsteuermodule erhalten werden, durch die Verhaltensalgorithmusmodule zu verarbeiten sind, um adaptive Aktuatorsteueranweisungen für die Aktuatorsteuermodule zu erzeugen.

2. Das Verfahren nach Anspruch 1, wobei das Verfahren ferner umfasst:
Bestimmen, durch den Rechenknoten, dass der Satz von ausführbaren Dateien mindestens eine containerisierte ausführbare Datei (424) enthält;
Erhalten, durch den Rechenknoten, für die mindestens eine containerisierte ausführbare Datei, einer isolierten Laufzeitkonfiguration (540) für die mindestens eine containerisierte ausführbare Datei und eindeutiger und unveränderlicher Pfadinformation (438) für ein Element (428) einer isolierten Laufzeitumgebung, die mit der mindestens einen containerisierten ausführbaren Datei assoziiert ist; und
wobei Erzeugen, durch den Rechenknoten, der Konfigurationsdatei (410) ferner die erhaltene isolierte Laufzeitkonfiguration und die erhaltene eindeutige und unveränderliche Pfadinformation für das Element der isolierten Laufzeitumgebung verwendet.

3. Das Verfahren nach Anspruch 2, wobei jede isolierte Laufzeitkonfiguration eines oder mehrere umfasst von: einer Sicherheitszugriffsrichtlinie, einer Verarbeitungsressourcennutzungsbeschränkung und einer Speichernutzungsbeschränkung für die isolierte Laufzeitumgebung.

4. Das Verfahren nach einem der Ansprüche 1 bis 3, wobei das Verfahren umfasst:
Erhalten, durch den Rechenknoten, von eindeutiger und unveränderlicher Pfadinformation (438) für eine Konfigurationsvorlagendatei (426) einer ausführbaren Datei des Satzes von ausführbaren Dateien; und
wobei die Konfigurationsvorlagendatei eindeutige und unveränderliche Pfadinformation (437) für die ausführbare Datei (422) und, optional, eindeutige und unveränderliche Pfadinformation für Elemente einer isolierten Laufzeitumgebung der ausführbaren Datei umfasst.

5. Das Verfahren nach Anspruch 4, wobei die Konfigurationsvorlagendatei ferner umfasst:
Standardausführungsparameter, die an die ausführbare Datei des Satzes von ausführbaren Dateien bei Ausführung weitergegeben werden sollen; und/oder
eine standardmäßige isolierte Laufzeitkonfiguration für die zugehörige isolierte Laufzeitumgebung; und
wobei das Verfahren ferner umfasst:
Erhalten, durch den Rechenknoten, von Daten, die Abweichungen von den Standardausführungsparametern und/oder von der standardmäßigen isolierten Laufzeitkonfiguration spezifizieren; und
wobei Erzeugen der Konfigurationsdatei (410), durch den Rechenknoten, ferner Verwenden der erhaltenen Daten umfasst.

6. Das Verfahren nach einem der Ansprüche 1 bis 5, wobei die eindeutige und unveränderliche Pfadinformation eindeutige und unveränderliche Uniform Resource Locators, URLs, umfasst, die auf eine ausführbare Datei und/oder ein isoliertes Laufzeitumgebungselement für eine containerisierte ausführbare Datei zeigen, die in einem entfernten Speicher gespeichert ist.

7. Ein Rechensystem (310), umfassend:
einen oder mehrere Rechenknoten (312), umfassend Speicher (316) und einen Prozessor (314);
wobei der eine oder die mehreren Rechenknoten konfiguriert sind, um über ein Netzwerk (320) Daten an ein Endgerät und/oder an ein Robotersystem (110, 120, 200, 330) zu übertragen; und
wobei der eine oder die mehreren Rechenknoten konfiguriert sind, um das Verfahren nach einem der vorhergehenden Ansprüche 1 bis 6 auszuführen.

8. Das Rechensystem nach Anspruch 7, wobei das Rechensystem ferner konfiguriert ist, um die erzeugte Konfigurationsdatei (410) zum Herunterladen auf ein Endgerät und/oder das Robotersystem (110, 120, 200, 330) bereitzustellen.

9. Ein Verfahren zum Konfigurieren eines Robotersystems (110, 120, 200, 330) zur Ausführung eines nichtdeterministischen Verhaltens, das sich an eine sich dynamisch verändernde Umgebung anpasst, das Verfahren umfassend:
Herunterladen, durch das Robotersystem (110, 120, 200, 330), einer Konfigurationsdatei (410), die nach einem der Ansprüche 1 bis 6 erzeugt wurde.

10. Das Verfahren nach Anspruch 9, ferner umfassend Herunterladen des Satzes von ausführbaren Dateien (420, 422, 424) und, optional, des isolierten Laufzeitumgebungselements (428) unter Verwendung der eindeutigen und unveränderlichen Pfadinformation (432 bis 438), die in der Konfigurationsdatei (410) enthalten ist, ferner umfassend Konfigurieren der Datenaustauschschnittstellen des Satzes von ausführbaren Dateien basierend auf der Datenaustauschkonfiguration, die in der Konfigurationsdatei (410) enthalten ist.

11. Ein Robotersystem (110, 120, 200, 330), umfassend:
einen oder mehrere Sensoren (220) und Aktuatoren (230, 240); und
eine Verarbeitungsschaltung (250), die betriebsfähig mit dem Speicher (260), einer Netzwerkschnittstelle und dem einen oder den mehreren Sensoren und Aktuatoren verbunden ist; wobei das Robotersystem (110, 120, 200, 330) konfiguriert ist, um das Verfahren nach Anspruch 9 oder 10 auszuführen.

12. Ein Computerprogramm, umfassend Anweisungen, die, wenn sie durch ein Robotersystem (110, 120, 200, 330) mit einer Verarbeitungsschaltung ausgeführt werden, das Robotersystem (110, 120, 200, 330) veranlassen, das Verfahren nach Anspruch 9 oder 10 auszuführen.

13. Eine Konfigurationsdatei (410) zur Programmcodezusammenstellung und Laufzeitprozessorchestrierung eines Computerprogramms, das ein nichtdeterministisches Verhalten eines Robotersystems (110, 120, 200, 330) definiert, das sich an eine sich dynamisch verändernde Umgebung anpasst, die Konfigurationsdatei (410) umfassend:
eindeutige und unveränderliche Pfadinformation (510) für jede ausführbare Datei eines Satzes von ausführbaren Dateien (420, 422, 424), wobei jede ausführbare Datei Programmcode umfasst, der ein Funktionselement des nichtdeterministischen Verhaltens definiert;
Datenaustauschprotokollkonfigurationen (520) für den Satz von ausführbaren Dateien; und
Laufzeitprozessorchestrierungsinformation (530), die mindestens eine Verarbeitungsbeziehung für den Satz von ausführbaren Dateien spezifiziert,
wobei der Satz von ausführbaren Dateien ein oder mehrere Sensorsteuermodule, ein oder mehrere Aktuatorsteuermodule und ein oder mehrere Verhaltensalgorithmusmodule umfasst; und
wobei die Laufzeitprozessorchestrierungsinformation, die durch den Rechenknoten erhalten wird, Information umfasst, die spezifiziert, wie Sensordaten, die über die Sensorsteuermodule erhalten werden, durch die Verhaltensalgorithmusmodule zu verarbeiten sind, um adaptive Aktuatorsteueranweisungen für die Aktuatorsteuermodule zu erzeugen.

## Revendications

1. Un procédé mis en œuvre par calculateur (1100) pour générer un fichier de configuration (410) pour l'assemblage du code de programme et l'orchestration du processus de runtime d'un programme informatique définissant un comportement non déterministe d'un système robotique (110, 120, 200, 330) qui s'adapte à un environnement en évolution dynamique, le procédé comprenant :
l'obtention (1110), par un nœud de calcul (312), pour chaque exécutable d'un ensemble d'exécutables, d'informations de chemin unique et immuable (510), dans lequel chaque exécutable comprend un code de programme définissant un élément fonctionnel du comportement non déterministe ;
l'obtention (1120), par le nœud de calcul, des configurations de protocole d'échange de données (520) pour l'ensemble d'exécutables ;
l'obtention (1130), par le nœud de calcul, d'informations d'orchestration de processus de runtime (530) spécifiant au moins une relation de traitement pour l'ensemble d'exécutables ; et
la génération (1140), par le nœud de calcul, du fichier de configuration (410) en utilisant les informations de chemin unique et immuable obtenues pour l'ensemble d'exécutables, les configurations de protocole d'échange de données pour l'ensemble d'exécutables et les informations d'orchestration de processus de runtime pour l'ensemble d'exécutables ;
dans lequel l'ensemble d'exécutables comprend un ou plusieurs modules de contrôle de capteur, un ou plusieurs modules de contrôle d'actionneur et un ou plusieurs modules d'algorithmes de comportement ; et
dans lequel les informations d'orchestration de processus de runtime, obtenues par le nœud de calcul, comprennent des informations spécifiant comment les données des capteur obtenues via les modules de contrôle de capteur doivent être traitées par les modules d'algorithmes de comportement afin de générer des instructions adaptatives de contrôle d'actionneur pour les modules de contrôle d'actionneur.

2. Le procédé selon la revendication 1, le procédé comprenant en outre :
la détermination, par le nœud de calcul, que l'ensemble d'exécutables contient au moins un exécutable conteneurisé (424) ;
l'obtention, par le nœud de calcul, pour l'au moins un exécutable conteneurisé, d'une configuration de runtime isolée (540) pour l'au moins un exécutable conteneurisé et d'informations de chemin unique et immuable (438) pour un élément (428) d'un environnement de runtime isolé associé à l'au moins un exécutable conteneurisé ; et
dans lequel la génération, par le nœud de calcul, du fichier de configuration (410) utilise en outre la configuration de runtime isolée obtenue et les informations de chemin unique et immuable obtenues pour l'élément de l'environnement de runtime isolé.

3. Le procédé selon la revendication 2, dans lequel chaque configuration de runtime isolée comprend un ou plusieurs parmi : une politique de sécurité d'accès, une restriction d'utilisation de ressources de traitement et une restriction d'utilisation de mémoire pour l'environnement de runtime isolé.

4. Le procédé selon l'une des revendications 1 à 3, le procédé comprenant :
l'obtention, par le nœud de calcul, d'informations de chemin unique et immuable (438) pour un fichier de modèle de configuration (426) d'un exécutable de l'ensemble d'exécutables ; et
dans lequel le fichier de modèle de configuration comprend des informations de chemin unique et immuable (437) pour l'exécutable (422) et, éventuellement, des informations de chemin unique et immuable pour des éléments d'un environnement de runtime isolé de l'exécutable.

5. Le procédé selon la revendication 4, dans lequel le fichier de modèle de configuration comprend en outre :
des paramètres d'exécution par défaut à transmettre à l'exécutable de l'ensemble d'exécutables lors de l'exécution ; et/ou
une configuration de runtime isolée par défaut pour l'environnement de runtime isolé associé ; et
le procédé comprend en outre :
l'obtention, par le nœud de calcul, de données spécifiant des écarts par rapport aux paramètres d'exécution par défaut et/ou par rapport à la configuration de runtime isolée par défaut ; et
dans lequel la génération du fichier de configuration (410), par le nœud de calcul, comprend en outre l'utilisation des données obtenues.

6. Le procédé selon l'une des revendications 1 à 5, dans lequel les informations de chemin unique et immuable comprennent des localisateurs uniformes de ressource, URL, uniques et immuables, pointant vers un exécutable et/ou un élément d'environnement de runtime isolé pour un exécutable conteneurisé stocké dans un stockage distant.

7. Un système informatique (310) comprenant :
un ou plusieurs nœuds de calcul (312) comprenant une mémoire (316) et un processeur (314) ;
dans lequel les un ou plusieurs nœuds de calcul sont configurés pour transmettre, via un réseau (320), des données à un dispositif terminal et/ou à un système robotique (110, 120, 200, 330) ; et
dans lequel les un ou plusieurs nœuds de calcul sont configurés pour exécuter le procédé selon l'une des revendications 1 à 6.

8. Le système informatique selon la revendication 7, dans lequel le système informatique est en outre configuré pour fournir le fichier de configuration généré (410) en téléchargement vers un dispositif terminal et/ou le système robotique (110, 120, 200, 330).

9. Un procédé de configuration d'un système robotique (110, 120, 200, 330) pour l'exécution d'un comportement non déterministe qui s'adapte à un environnement en évolution dynamique, le procédé comprenant :
le téléchargement, par le système robotique (110, 120, 200, 330), d'un fichier de configuration (410) généré conformément à l'une des revendications 1 à 6.

10. Le procédé selon la revendication 9, comprenant en outre le téléchargement de l'ensemble d'exécutables (420, 422, 424) et, éventuellement, de l'élément d'environnement de runtime isolé (428) en utilisant les informations de chemin unique et immuable (432 à 438) incluses dans le fichier de configuration (410), comprenant en outre la configuration des interfaces d'échange de données de l'ensemble d'exécutables sur la base de la configuration d'échange de données incluse dans le fichier de configuration (410).

11. Un système robotique (110, 120, 200, 330) comprenant :
un ou plusieurs capteurs (220) et actionneurs (230, 240) ; et
une circuiterie de traitement (250) connectée opérationnellement à une mémoire (260), à une interface réseau et aux un ou plusieurs capteurs et actionneurs ;
dans lequel le système robotique (110, 120, 200, 330) est configuré pour exécuter le procédé selon la revendication 9 ou 10.

12. Un programme informatique comprenant des instructions qui, lorsqu'elles sont exécutées par un système robotique (110, 120, 200, 330) doté d'une circuiterie de traitement, entraînent le système robotique (110, 120, 200, 330) à exécuter le procédé selon la revendication 9 ou 10.

13. Un fichier de configuration (410) pour l'assemblage du code de programme et l'orchestration de processus de runtime d'un programme informatique définissant un comportement non déterministe d'un système robotique (110, 120, 200, 330) qui s'adapte à un environnement en évolution dynamique, le fichier de configuration (410) comprenant :
des informations de chemin unique et immuable (510) pour chaque exécutable d'un ensemble d'exécutables (420, 422, 424), dans lequel chaque exécutable comprend un code de programme définissant un élément fonctionnel du comportement non déterministe ;
des configurations de protocole d'échange de données (520) pour l'ensemble d'exécutables ; et
des informations d'orchestration de processus de runtime (530) spécifiant au moins une relation de traitement pour l'ensemble d'exécutables,
dans lequel l'ensemble d'exécutables comprend un ou plusieurs modules de contrôle de capteur, un ou plusieurs modules de contrôle d'actionneur et un ou plusieurs modules d'algorithmes de comportement ; et
dans lequel les informations d'orchestration de processus de runtime, obtenues par le nœud de calcul, comprennent des informations spécifiant comment les données des capteur obtenues via les modules de contrôle de capteur doivent être traitées par les modules d'algorithmes de comportement afin de générer des instructions adaptatives de contrôle d'actionneur pour les modules de contrôle d'actionneur.
